# EUROPEAN PATENT SPECIFICATION

(11) **EP 2 113 681 B1**
(45) Date of publication and mention of the grant of the patent: **12.10.2011**
(21) Application number: 09158466.4
(22) Date of filing: 22.04.2009
(51) Int. Cl.: F16F 13/30, F16F 15/00

(54) **Method for controlling an MR-fluid hydraulic mount connected to a vehicle engine**
Verfahren zur Steuerung eines mit einem Fahrzeugmotor verbundenen magnetorheologischen Fluidlagers
Procédé de contrôle d'un support hydraulique fluide MR connecté à un moteur de véhicule

(30) Priority: 01.05.2008 US 150931
(43) Date of publication of application: 04.11.2009
(73) Proprietor: BWI Company Limited S.A., 1628 Luxembourg (LU); Dr. Ing. h.c. F. Porsche Aktiengesellschaft, 71287 Weissach (DE)
(72) Inventor: Bodie, Mark O., Dayton, OH 45410 (US); Barta, David J., Beavercreek, OH 45434 (US); Brobeil, Thorsten, 71287 Weissach (DE); Ujhasi, Marco, 71287 Weissach (DE); Koch, Thorsten, 71287 Weissach (DE)
(74) Representative: Fox-Male, Nicholas Vincent Humbert

(56) References cited:
- WO-A1-2008/052726
- US-A1- 2002 153 647
- US-A1- 2003 025 255
- US-A1- 2004 154 524

## Description

### TECHNICAL FIELD

The present invention relates generally to hydraulic mounts, and more particularly to a method for controlling an MR-fluid (magnetorheological-fluid) hydraulic mount connected to a vehicle engine.

### BACKGROUND OF THE INVENTION

Conventional magnetorheological-fluid (MR-fluid) hydraulic mounts include those which are attachable to first and second motor-vehicle components (such as an automobile engine or transmission and an automobile body/frame) and which have a pumping chamber and a reservoir chamber. The pumping and reservoir chambers are separated by a partition plate having a through hole. These mounts also have an electric coil which magnetically influences the through hole. Magnetorheological fluid is placed in the pumping and reservoir chambers and in the through hole.

Examples of MR-fluid hydraulic-mounts are found in U.S. Patent Serial No. 6,622,995 and in US Patent Application Publication No. 2005/0230890. An example of a hydraulic mount having an integral controller is found in US Patent Application Publication No. 2005/0029720.

What is needed is an improved method for controlling an MR-fluid hydraulic mount connected to a vehicle engine.
US Patent Specification 2002/153647 discloses a hydraulic mount with a chamber and pressure sensor to sense fluid pressure.
International Patent Specification WO 2008/052726 discloses a bearing control for an engine, with a pressure detector and current switch operable if speed change exceeds a threshold.

### SUMMARY OF THE INVENTION

The present invention provides a method as defined in claim 1.

The method may include the features of any one or more of dependent claims 2 to 11.

The present invention also provides a method as defined in claim 12.

A first method of the invention is for controlling an MR-fluid hydraulic mount connected to a vehicle engine. The mount includes an internal MR-fluid cavity. The mount includes a partition plate assembly partitioning the cavity into first and second MR-fluid chambers. The partition plate assembly has an orifice extending from the first MR-fluid chamber to the second MR-fluid chamber. The mount includes an electric coil positioned to magnetically influence the orifice. The first method includes steps a) through d). Step a) includes, when the vehicle engine is at idle, determining a reference pressure as a fluid pressure within the second MR-fluid chamber. Step b) includes, when the vehicle engine is above idle, calculating a delta pressure as a difference between a previous fluid pressure and a current fluid pressure within the second MR-fluid chamber. Step c) includes determining a first dead-band value using at least a difference between the reference pressure and the current fluid pressure. Step d) includes, when the delta pressure is greater than the first dead-band value, determining a first command electric current to be applied to the electric coil using at least the difference between the reference pressure and the current fluid pressure and applying the first command electric current to the electric coil.

A method representing background art involves controlling an MR-fluid hydraulic mount connected to a vehicle engine. The mount includes an internal MR-fluid cavity. The mount includes a partition plate assembly partitioning the cavity into first and second MR-fluid chambers. The mount includes an MR-fluid pressure sensor in fluid communication with the second MR-fluid chamber. The partition plate assembly has an orifice extending from the first MR-fluid chamber to the second MR-fluid chamber. The mount includes an electric coil positioned to magnetically influence the orifice. The method includes steps a) through d). Step a) includes, when the vehicle engine is at idle, determining a reference pressure as a fluid pressure within the second MR-fluid chamber using the MR-fluid pressure sensor. Step b) includes, when the vehicle engine is above idle, calculating a delta pressure as a difference between a previous fluid pressure and a current fluid pressure within the second MR-fluid chamber, wherein the previous and current fluid pressures are obtained using the MR-fluid pressure sensor. Step c) includes determining a first dead-band value using at least a difference between the reference pressure and the current fluid pressure. Step d) includes, when the delta pressure is greater than the first dead-band value, determining a first command electric current to be applied to the electric coil using at least the difference between the reference pressure and the current fluid pressure and applying the first command electric current to the electric coil.

A third method of the invention is for controlling an MR-fluid hydraulic mount connected to a vehicle engine. The mount includes an internal MR-fluid cavity. The mount includes a partition plate assembly partitioning the cavity into first and second MR-fluid chambers. The partition plate assembly has an orifice extending from the first MR-fluid chamber to the second MR-fluid chamber. The mount includes an electric coil positioned to magnetically influence the orifice. The third method includes steps a) through c). Step a) includes, when the vehicle engine is at idle, determining a reference pressure as a fluid pressure within the second MR-fluid chamber. Step b) includes, when the vehicle engine is above idle, determining a command electric current to be applied to the electric coil using at least a difference between the reference pressure and a current fluid pressure within the second MR-fluid chamber. Step c) includes applying the command electric output current to the electric coil.

Several benefits and advantages are derived from one or more of the methods of the invention. In one example, the MR-fluid hydraulic mount installed in a vehicle is controlled by using at least a fluid pressure within the second MR-fluid chamber obtained by using the MR-fluid pressure sensor. This avoids problems of controlling the mount using a position or velocity sensor to determine compression and rebound of the mount, such problems including noise, reliability of the position/velocity sensor arm attachment, packaging of the position/velocity sensor, and assembly cost of the position/velocity sensor.

### SUMMARY OF THE DRAWINGS

Figure 1 is a longitudinal cross-sectional schematic view of an embodiment of an MR-fluid (magnetorheological-fluid) hydraulic mount of the invention;

Figure 2 is a diagram showing the mount of figure 1 attached to a vehicle body and a vehicle engine;

Figure 3 is a flow chart of a first method for controlling an MR-fluid hydraulic mount, such as the mount of figures 1-2; and

Figure 4 is a diagram of a low-pass filter which can be used to filter a delta pressure in performing the first method of figure 3.

### DESCRIPTION OF THE PREFERED EMBODIMENT

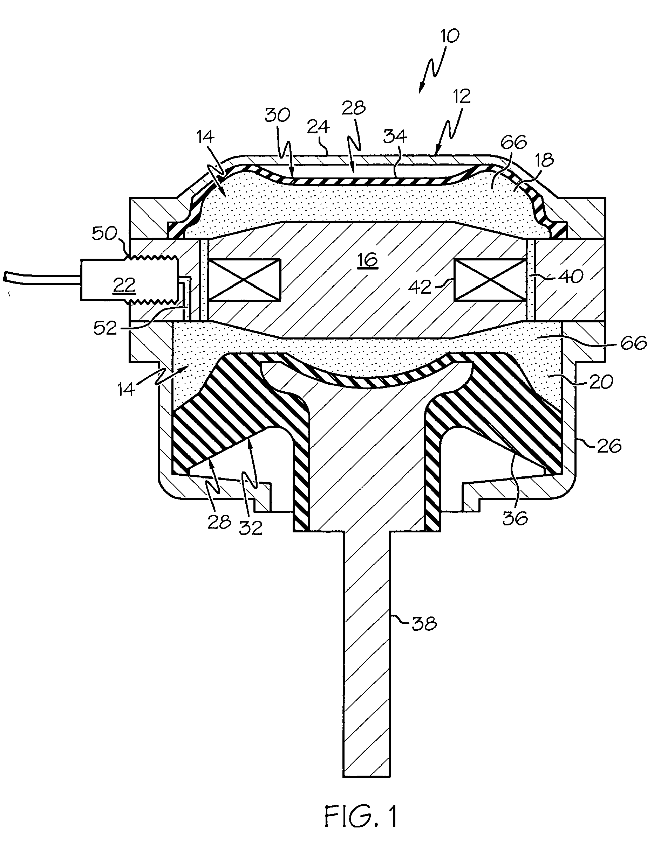

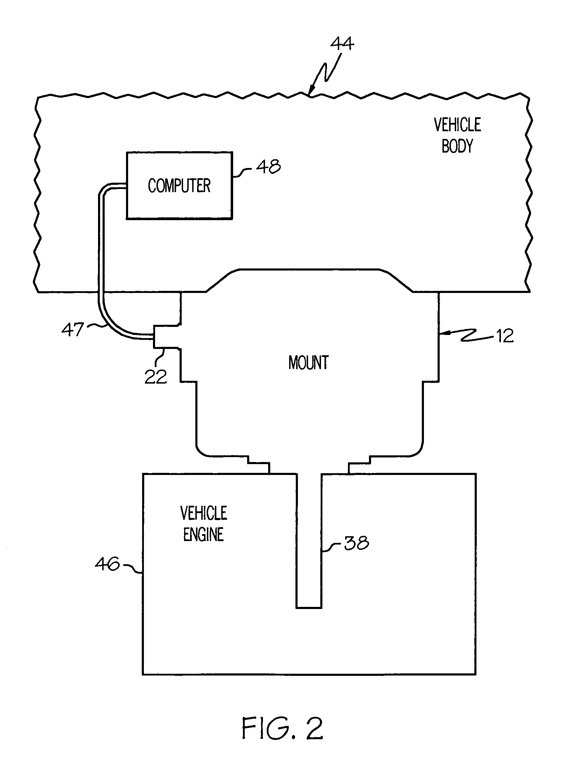

Referring now to the drawing, figures 1-2 show an embodiment of the present invention. A first expression of the embodiment of figure 1-2 is for apparatus 10 including an MR-fluid (magnetorheological-fluid) hydraulic mount 12. The mount 12 includes an internal MR-fluid cavity 14 and a partition plate assembly 16. The partition plate assembly 16 partitions the cavity 14 into first and second MR-fluid chambers 18 and 20. The mount 12 is adapted to receive an MR-fluid pressure sensor 22 in fluid communication with the second MR-fluid chamber 20.

In one enablement of the first expression of the embodiment of figures 1-2, the mount 12 includes a base plate 24 and a housing 26, wherein the partition plate assembly 16 is disposed between and fixedly attached to the base plate 24 and the housing 26. In one variation, the mount 12 includes an MR-fluid-sealing assembly 28 including a first portion 30 and a second portion 32, wherein the first portion 30 partially defines the first MR-fluid chamber 18 and wherein the second portion 32 partially defines the second MR-fluid chamber 20.

In one modification, the first portion 30 includes a flexible diaphragm 34 which is disposed between the base plate 24 and the partition plate assembly 16. In the same or a different modification, the second portion 32 includes a flexible molded assembly 36 which is less flexible than the diaphragm 34 and which is attached to the housing 26. In one illustration, the mount 12 includes a mounting stud assembly 38 which is attached to the molded assembly 36.

In one construction, the partition plate assembly 16 includes an orifice 40 extending from the first MR-fluid chamber 18 to the second MR-fluid chamber 20, and the mount 12 includes an electric coil 42 disposed to magnetically influence the orifice 40. In one application, the base plate 24 is adapted to be attached to a vehicle body 44, the mounting stud assembly 38 is adapted to be attached to a vehicle engine 46 (providing an engine hanging mount), and the MR-fluid pressure sensor 22 is operatively connectable (such as by a cable 47) to a vehicle computer 48 adapted to determine a command electric current to be applied to the electric coil 42. In one example, the partition plate assembly 16 includes a port 50 adapted to receive the MR-fluid pressure sensor 22. In one arrangement, the partition plate assembly 16 includes a passageway 52 extending from the port 50 to the second MR-fluid chamber 20. In another example, the housing 26 includes a port (not shown) adapted to receive the MR-fluid pressure sensor 22. Other examples are left to the artisan.

It is noted that the partition plate assembly 16 may be thick or thin and may be monolithic or made of a plurality of parts. In one configuration of the first expression of the embodiment of figures 1-2, the orifice 40 is disposed radially outward of the electric coil 42, and the partition plate assembly 16 is devoid of any decoupler and is devoid of any non-MR-fluid orifice. In one employment of the first expression of the embodiment of figures 1-2, the first MR-fluid chamber 18 is a reservoir chamber and the second MR-fluid chamber 20 is a pumping chamber.

A second expression of the embodiment of figures 1-2 is for apparatus 10 including an MR-fluid hydraulic mount 12. The mount 12 includes an internal MR-fluid cavity 14, a partition plate assembly 16, and an MR-fluid pressure sensor 22. The partition plate assembly 16 partitions the cavity into first and second MR-fluid chambers 18 and 20. The MR-fluid pressure sensor 22 is in fluid communication with the second MR-fluid chamber 20.

It is noted that the enablements, variations, etc. of the first expression of the embodiment of figures 1-2 are equally applicable to the second expression of the embodiment of figures 1-2. In one example of the second expression of the embodiment of figures 1-2, the MR-fluid pressure sensor 22 is attached to the partition plate assembly 16. In one arrangement, the partition plate assembly 16 includes a passageway 52 extending from the MR-fluid pressure sensor 22 to the second MR-fluid chamber 20.

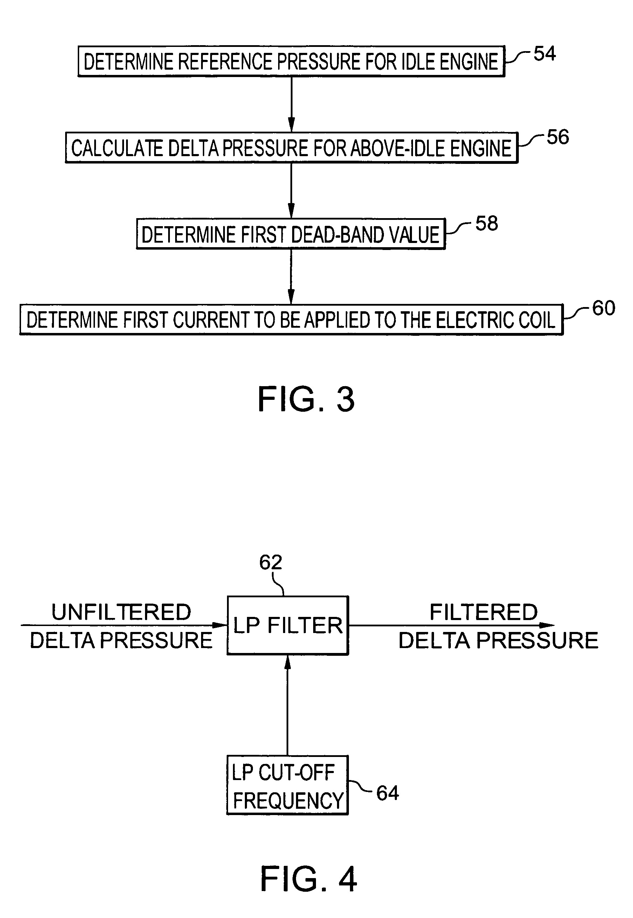

A first method of the invention is for controlling an MR-fluid hydraulic mount 12 connected to a vehicle engine 46. The mount 12 includes an internal MR-fluid cavity 14 and includes a partition plate assembly 16 partitioning the cavity 14 into first and second MR-fluid chambers 18 and 20. The partition plate assembly 16 has an orifice 40 extending from the first MR-fluid chamber 18 to the second MR-fluid chamber 20, and the mount 12 includes an electric coil 42 disposed to magnetically influence the orifice 40. The first method includes steps a) through d). Step a) is labeled as "Determine Reference Pressure For Idle Engine" in block 54 of figure 3. Step a) includes, when the vehicle engine 46 is at idle, determining a reference pressure as a fluid pressure within the second MR-fluid chamber 20. Step b) is labeled as "Calculate Delta Pressure For Above-Idle Engine" in block 56 of figure 3. Step b) includes, when the vehicle engine 46 is above idle, calculating a delta pressure as a difference between a previous fluid pressure and a current fluid pressure within the second MR-fluid chamber 20. Step c) is labeled as "Determine First Dead-Band Value" in block 58 of figure 3. Step c) includes determining a first dead-band value using at least a difference between the reference pressure and the current fluid pressure. Step d) is labeled as "Determine First Current To Be Applied To The Electric Coil" in block 60 of figure 3. Step d) includes, when the delta pressure is greater than the first dead-band value, determining a first command electric current to be applied to the electric coil 42 using at least the difference between the reference pressure and the current fluid pressure and applying the first command electric current to the electric coil 42.

It is noted that pressures and/or pressure differences may be filtered or unfiltered pressures and/or pressure differences. In one variation of the first method, step a) is performed every time the vehicle engine 46 is at idle. In another variation, step a) is performed one time during an engine cycle (engine turn on to engine turn off) the first time the vehicle engine 46 is at idle.

In one application, the first method also includes determining a second dead-band value using at least the difference between the reference pressure and the current fluid pressure. In this application, step d) sets the first command electric current to zero when the difference between the reference pressure and the current fluid pressure is not greater than the second dead-band value.

In an extension of the first method, there also is included step e). In one variation, step e) includes, when the delta pressure is not greater than the first dead-band value, setting the first command electric current to zero. In a different variation, step e) includes, when the delta pressure is not greater than the first dead-band value, determining a second command electric current to be applied to the electric coil 42 using at least the difference between the reference pressure and the current pressure and applying the second command electric current to the electric coil 42.

In one employment of the first method, as seen in figure 4, there is also included the step of using a digital low-pass (LP) filter 62 to filter the delta pressure. In one embodiment, the low-pass filter 62 has a low-pass (LP) cut-off frequency 64 which is set higher for higher-frequency vehicle events and which is set lower for lower-frequency vehicle events. Examples of vehicle events include a rough road (detectable, for example, by using wheel-mounted accelerometers) and a wheel spin (detectable, for example, by using wheel speed sensors). In one variation, step c) includes determining the first dead-band value using at least the difference between the reference pressure and the current pressure for a particular vehicle event. In one modification, step c) includes determining the first dead-band value using at least the difference between the reference pressure and the current pressure for the particular vehicle event and for a particular vehicle speed. An example of a vehicle-speed-dependent vehicle event is a rough road.

In one implementation of the first method and an application thereof, the first and second dead-band values are experimentally determined (and stored in lookup tables) for desirable driver/passenger comfort and desirable vehicle performance for each vehicle model for different values of delta pressure. In the same implementation of the first method and a variation of an extension thereof, the first and second command electric currents are also experimentally determined (and stored in lookup tables) for desirable driver/passenger comfort and desirable vehicle performance for each vehicle model for different values of the difference between the reference pressure and the current fluid pressure. It is noted that a positive delta pressure indicates the mount 12 is undergoing compression and that a negative delta pressure indicates the mount 12 is undergoing rebound.

In one utilization of the first method, a time interval of substantially one millisecond exists between the previous fluid pressure and the current fluid pressure. In the same or a different utilization, the first and second MR-fluid chambers 18 and 20 and the orifice 40 (and the passageway 52) contain MR fluid 66.

A second method of the invention is for controlling an MR-fluid hydraulic mount 12 connected to a vehicle engine 46. The mount 12 includes an internal MR-fluid cavity 14 and a partition plate assembly 16 partitioning the cavity 14 into first and second MR-fluid chambers 18 and 20. The mount 12 includes an MR-fluid pressure sensor 22 in fluid communication with the second MR-fluid chamber 20. The partition plate assembly 16 has an orifice 40 extending from the first MR-fluid chamber 18 to the second MR-fluid chamber 20. The mount 12 includes an electric coil 42 disposed to magnetically influence the orifice 40. The second method includes steps a) through d). Step a) includes, when the vehicle engine 46 is at idle, determining a reference pressure as a fluid pressure within the second MR-fluid chamber 20 using the MR-fluid pressure sensor 22. Step b) includes; when the vehicle engine 46 is above idle, calculating a delta pressure as a difference between a previous fluid pressure and a current fluid pressure within the second MR-fluid chamber 20, wherein the previous and current fluid pressures are obtained using the MR-fluid pressure sensor 22. Step c) includes determining a first dead-band value using at least a difference between the reference pressure and the current fluid pressure. Step d) includes, when the delta pressure is greater than the first dead-band value, determining a first command electric current to be applied to the electric coil 42 using at least the difference between the reference pressure and the current fluid pressure and applying the first command electric current to the electric coil 42.

It is noted that the applications, extensions, etc. of the first method are equally applicable to the second method.

A third method of the invention, which is broader than the first and second methods, is for controlling an MR-fluid hydraulic mount 12 connected to a vehicle engine 46. The mount 12 includes an internal MR-fluid cavity 14 and includes a partition plate assembly 16 partitioning the cavity 14 into first and second MR-fluid chambers 18 and 20. The partition plate assembly 16 has an orifice 40 extending from the first MR-fluid chamber 18 to the second MR-fluid chamber 20. The mount 12 includes an electric coil 42 disposed to magnetically influence the orifice 40 The third method includes steps a) through c). Step a) includes, when the vehicle engine 46 is at idle, determining a reference pressure as a fluid pressure within the second MR-fluid chamber 20. Step b) includes, when the vehicle engine 46 is above idle, determining a command electric current to be applied to the electric coil 42 using at least a difference between the reference pressure and a current fluid pressure within the second MR-fluid chamber 20. Step c) includes applying the command electric output current to the electric coil.

In one implementation of the third method, the mount 12 includes an MR-fluid pressure sensor 22 in fluid communication with the second MR-fluid chamber 20, and the reference, previous and current fluid pressures are obtained using the MR-fluid pressure sensor 22.

Several benefits and advantages are derived from one or more of the expressions of an embodiment of the invention. In one example, the MR-fluid hydraulic mount is installed in a vehicle and is controlled by using at least a fluid pressure within the second MR-fluid chamber obtained by using the MR-fluid pressure sensor. This avoids problems of controlling the mount using a position or velocity sensor to determine compression and rebound of the mount, such problems including noise, reliability of the position/velocity sensor arm attachment, packaging of the position/velocity sensor, and assembly cost of the position/velocity sensor.

The foregoing description of several expressions of an embodiment and methods of the invention has been presented for purposes of illustration. It is not intended to be exhaustive or to limit the invention to the precise form disclosed, and obviously many modifications and variations are possible in light of the above teaching. It is intended that the scope of the invention be defined by the claims appended hereto.

## Claims

1. A method for controlling an MR-fluid hydraulic mount connected to a vehicle engine, wherein the mount includes an internal MR-fluid cavity, wherein the mount includes a partition plate assembly partitioning the cavity into first and second MR-fluid chambers, wherein the partition plate assembly has an orifice extending from the first MR-fluid chamber to the second MR-fluid chamber, wherein the mount includes an electric coil disposed to magnetically influence the orifice, and wherein the method includes the steps of:
a) when the vehicle engine is at idle, determining a reference pressure as a fluid pressure within the second MR-fluid chamber;
b) when the vehicle engine is above idle, calculating a delta pressure as a difference between a previous fluid pressure and a current fluid pressure within the second MR-fluid chamber;
c) determining a first dead-band value using at least a difference between the reference pressure and the current fluid pressure; and
d) when the delta pressure is greater than the first dead-band value, determining a first command electric current to be applied to the electric coil using at least the difference between the reference pressure and the current fluid pressure and applying the first command electric current to the electric coil.

2. The method of claim 1, also including determining a second dead-band value using at least the difference between the reference pressure and the current fluid pressure, wherein step d) sets the first command electric current to zero when the difference between the reference pressure and the current fluid pressure is not greater than the second dead-band value.

3. The method of claim 1, also including the step of:
e) when the delta pressure is not greater than the first dead-band value, setting the first command electric current to zero.

4. The method of claim 1, also including the step of:
e) when the delta pressure is not greater than the first dead-band value, determining a second command electric current to be applied to the electric coil using at least the difference between the reference pressure and the current pressure and applying the second command electric current to the electric coil.

5. The method of claim 1, also including the step of using a low-pass filter to filter the delta pressure.

6. The method of claim 5, wherein the low-pass filter has a low-pass cut-off frequency which is set higher for higher-frequency vehicle events and which is set lower for lower-frequency vehicle events.

7. The method of claim 6, wherein step c) includes determining the first dead-band value using at least the difference between the reference pressure and the current pressure for a particular vehicle event.

8. The method of claim 6, wherein step c) includes determining the first dead-band value using at least the difference between the reference pressure and the current pressure for the particular vehicle event and for a particular vehicle speed.

9. The method of claim 1, wherein a time interval of substantially one millisecond exists between the previous fluid pressure and the current fluid pressure.

10. The method of claim 1, wherein the first and second MR-fluid chambers and the orifice contain MR fluid.

11. The method of any one of claims 1 to 10, wherein the mount includes an MR-fluid pressure sensor in fluid communication with the second MR-fluid chamber, wherein step a) includes when the vehicle engine is at idle, determining a reference pressure as a fluid pressure within the second MR-fluid chamber using the MR-fluid pressure sensor; and step b) includes when the vehicle engine is above idle, calculating a delta pressure as a difference between a previous fluid pressure and a current fluid pressure within the second MR-fluid chamber, wherein the previous and current fluid pressures are obtained using the MR-fluid pressure sensor.

12. A method for controlling an MR-fluid hydraulic mount connected to a vehicle engine, wherein the mount includes an internal MR-fluid cavity, wherein the mount includes a partition plate assembly partitioning the cavity into first and second MR-fluid chambers, wherein the partition plate assembly has an orifice extending from the first MR-fluid chamber to the second MR-fluid chamber, wherein the mount includes an electric coil disposed to magnetically influence the orifice, and wherein the method includes the steps of:
a) when the vehicle engine is at idle, determining a reference pressure as a fluid pressure within the second MR-fluid chamber;
b) when the vehicle engine is above idle, determining a command electric current to be applied to the electric coil using at least a difference between the reference pressure and a current fluid pressure within the second MR-fluid chamber; and
c) applying the command electric output current to the electric coil.

## Patentansprüche

1. Ein Verfahren zum Steuern eines MR-Fluid-Hydrauliklagers, das mit einem Fahrzeugmotor verbunden ist, wobei das Lager einen internen MR-Fluid-Hohlraum aufweist, wobei das Lager eine Trennblechanordnung aufweist, die den Hohlraum in eine erste und zweite MR-Fluid-Kammer aufteilt, wobei die Trennblechanordnung eine Öffnung aufweist, die sich von der ersten MR-Fluid-Kammer zu der zweiten MR-Fluid-Kammer erstreckt, wobei das Lager eine elektrische Wicklung aufweist, die angeordnet ist, um die Öffnung magnetisch zu beeinflussen, und wobei das Verfahren die folgenden Schritte aufweist:
a) wenn der Fahrzeugmotor im Leerlauf ist, Bestimmen eines Referenzdrucks als einen Fluiddruck innerhalb der zweiten MR-Fluid-Kammer;
b) wenn der Fahrzeugmotor über dem Leerlauf ist, Berechnen eines Deltadrucks als eine Differenz zwischen einem vorhergehenden Fluiddruck und einem aktuellen Fluiddruck innerhalb der zweiten MR-Fluid-Kammer;
c) Bestimmen eines ersten Totbereichswerts unter Verwendung von zumindest einer Differenz zwischen dem Referenzdruck und dem aktuellen Fluiddruck; und
d) wenn der Deltadruck größer als der erste Totbereichswert ist, Bestimmen eines ersten elektrischen Anweisungsstroms, der an die elektrische Wicklung angelegt werden soll, unter Verwendung von zumindest der Differenz zwischen dem Referenzdruck und dem aktuellen Fluiddruck und Anlegen des ersten elektrischen Anweisungsstroms an die elektrische Wicklung.

2. Das Verfahren gemäß Anspruch 1, ebenfalls aufweisend Bestimmen eines zweiten Totbereichswerts unter Verwendung von zumindest der Differenz zwischen dem Referenzdruck und dem aktuellen Fluiddruck, wobei Schritt d) den ersten elektrische Anweisungsstrom auf null setzt, wenn die Differenz zwischen dem Referenzdruck und dem aktuellen Fluiddruck nicht größer als der zweite Totbereichswert ist.

3. Das Verfahren gemäß Anspruch 1, ebenfalls aufweisend den folgenden Schritt:
e) wenn der Deltadruck nicht größer als der erste Totbereichswert ist, Setzen des ersten elektrischen Anweisungsstroms auf null.

4. Das Verfahren gemäß Anspruch 1, ebenfalls aufweisend den folgenden Schritt:
e) wenn der Deltadruck nicht größer als der erste Totbereichswert ist, Bestimmen eines zweiten elektrischen Anweisungsstroms, der an die elektrische Wicklung angelegt werden soll, unter Verwendung von zumindest der Differenz zwischen dem Referenzdruck und dem aktuellen Druck und Anlegen des zweiten elektrischen Anweisungsstroms an die elektrische Wicklung.

5. Das Verfahren gemäß Anspruch 1, ebenfalls aufweisend den Schritt des Verwendens eines Tiefpassfilters zum Filtern des Deltadrucks.

6. Das Verfahren gemäß Anspruch 5, wobei der Tiefpassfilter eine Tiefpass-Grenzfrequenz aufweist, die für höherfrequente Fahrzeugereignisse höher gesetzt wird und die für niederfrequentere Fahrzeugereignisse niedriger gesetzt werden.

7. Das Verfahren gemäß Anspruch 6, wobei Schritt c) das Bestimmen des ersten Totbereichswerts unter Verwendung von zumindest der Differenz zwischen dem Referenzdruck und dem aktuellen Druck für ein bestimmtes Fahrzeugereignis aufweist.

8. Das Verfahren gemäß Anspruch 6, wobei Schritt c) das Bestimmen des ersten Totbereichswerts unter Verwendung von zumindest der Differenz zwischen dem Referenzdruck und dem aktuellen Druck für das bestimmte Fahrzeugereignis und für eine bestimmte Fahrzeuggeschwindigkeit aufweist.

9. Das Verfahren gemäß Anspruch 1, wobei ein Zeitintervall von im Wesentlichen eine Millisekunde zwischen dem vorhergehenden Fluiddruck und dem aktuellen Fluiddruck existiert.

10. Das Verfahren gemäß Anspruch 1, wobei die erste und zweite MR-Fluid-Kammer und die Öffnung MR-Fluid enthalten.

11. Das Verfahren gemäß einem der Ansprüche 1 bis 10, wobei das Lager einen MR-Fluid-Drucksensor in Fluidverbindung mit der zweiten MR-Fluid-Kammer aufweist, wobei Schritt a), wenn der Fahrzeugmotor im Leerlauf ist, das Bestimmen eines Referenzdrucks als einen Fluiddruck innerhalb der zweiten MR-Fluid-Kammer unter Verwendung des MR-Fluid-Drucksensors aufweist; und Schritt b), wenn der Fahrzeugmotor über dem Leerlauf ist, das Berechnen eines Deltadrucks als eine Differenz zwischen einen vorhergehenden Fluiddruck und einem aktuellen Fluiddruck innerhalb der zweiten MR-Fluid-Kammer aufweist, wobei der vorhergehende und aktuelle Fluiddruck unter Verwendung des MR-Fluid-Drucksensors erhalten werden.

12. Ein Verfahren zum Steuern eines MR-Fluid-Hydrauliklagers, das mit einem Fahrzeugmotor verbunden ist, wobei das Lager einen internen MR-Fluid-Hohlraum aufweist, wobei das Lager eine Trennblechanordnung aufweist, die den Hohlraum in eine erste und zweite MR-Fluid-Kammer aufteilt, wobei die Trennblechanordnung eine Öffnung aufweist, die sich von der ersten MR-Fluid-Kammer zu der zweiten MR-Fluid-Kammer erstreckt, wobei das Lager eine elektrische Wicklung aufweist, die angeordnet ist, um die Öffnung magnetisch zu beeinflussen, und wobei das Verfahren die folgenden Schritte aufweist:
a) wenn der Fahrzeugmotor im Leerlauf ist, Bestimmen eines Referenzdrucks als einen Fluiddruck innerhalb der zweiten MR-Fluid-Kammer;
b) wenn der Fahrzeugmotor über dem Leerlauf ist, Bestimmen eines elektrischen Anweisungsstroms, der an die elektrische Wicklung angelegt werden soll, unter Verwendung von zumindest einer Differenz zwischen dem Referenzdruck und einem aktuellen Fluiddruck innerhalb der zweiten MR-Fluid-Kammer; und
c) Anlegen des elektrischen Anweisungsstroms an die elektrische Wicklung.

## Revendications

1. Procédé de commande d'un support hydraulique à fluide MR relié à un moteur de véhicule, dans lequel le support comprend une cavité interne pour fluide MR, dans lequel le support comprend un ensemble plaque de cloisonnement divisant la cavité en des première et seconde chambres de fluide MR, dans lequel l'ensemble plaque de cloisonnement a un orifice s'étendant depuis la première chambre de fluide MR jusqu'à la seconde chambre de fluide MR, dans lequel le support comprend une bobine électrique disposée pour influencer magnétiquement l'orifice, et dans lequel le procédé comprend les étapes consistant à :
a) lorsque le moteur du véhicule tourne au ralenti, déterminer une pression de référence comme pression de fluide à l'intérieur de la seconde chambre de fluide MR,
b) lorsque le moteur du véhicule tourne plus vite qu'au ralenti, calculer une pression delta comme différence entre une pression de fluide précédente et une pression de fluide courante à l'intérieur de la seconde chambre de fluide MR,
c) déterminer une première valeur de zone morte à l'aide d'au moins une différence entre la pression de référence et la pression de fluide courante ; et
d) lorsque la pression delta est supérieure à la première valeur de zone morte, déterminer un premier courant électrique de commande à appliquer à la bobine électrique à l'aide d'au moins la différence entre la pression de référence et la pression de fluide courante et appliquer le premier courant électrique de commande à la bobine électrique.

2. Procédé selon la revendication 1, comprenant également la détermination d'une seconde valeur de zone morte à l'aide d'au moins la différence entre la pression de référence et la pression de fluide courante, dans lequel l'étape d) fixe le premier courant électrique de commande à zéro lorsque la différence entre la pression de référence et la pression de fluide courante n'est pas supérieure à la seconde valeur de zone morte.

3. Procédé selon la revendication 1, comprenant également l'étape consistant à :
e) lorsque la pression delta n'est pas supérieure à la première valeur de zone morte, fixer le premier courant électrique de commande à zéro.

4. Procédé selon la revendication 1, comprenant également l'étape consistant à :
e) lorsque la pression delta n'est pas supérieure à la première valeur de zone morte, déterminer un second courant électrique de commande à appliquer à la bobine électrique à l'aide d'au moins la différence entre la pression de référence et la pression courante et appliquer le second courant électrique de commande à la bobine électrique.

5. Procédé selon la revendication 1, comprenant également l'étape consistant à utiliser un filtre passe-bas pour filtrer la pression delta.

6. Procédé selon la revendication 5, dans lequel le filtre passe-bas a une fréquence de coupure passe-bas qui est fixée à un niveau plus élevé pour les événements de véhicule de fréquence plus élevée et qui est fixée à un niveau inférieur pour les événements de véhicule de fréquence moins élevée.

7. Procédé selon la revendication 6, dans lequel l'étape c) comprend la détermination de la première valeur de zone morte à l'aide d'au moins la différence entre la pression de référence et la pression courante pour un événement de véhicule particulier.

8. Procédé selon la revendication 6, dans lequel l'étape c) comprend la détermination de la première valeur de zone morte à l'aide d'au moins la différence entre la pression de référence et la pression courante pour l'événement de véhicule particulier et pour une vitesse de véhicule particulière.

9. Procédé selon la revendication 1, dans lequel un intervalle de temps de sensiblement une milliseconde existe entre la pression de fluide précédente et la pression de fluide courante.

10. Procédé selon la revendication 1, dans lequel les première et seconde chambres de fluide MR et l'orifice contiennent du fluide MR.

11. Procédé selon l'une quelconque des revendications 1 à 10, dans lequel le support comprend un capteur de pression de fluide MR en communication fluidique avec la seconde chambre de fluide MR, dans lequel l'étape a) comprend, lorsque le moteur du véhicule tourne au ralenti, l'opération consistant à déterminer une pression de référence comme pression de fluide à l'intérieur de la seconde chambre de fluide MR au moyen du capteur de pression de fluide MR, et l'étape b) comprend, lorsque le moteur du véhicule tourne plus vite qu'au ralenti, l'opération consistant à calculer une pression delta comme différence entre une pression de fluide précédente et une pression de fluide courante à l'intérieur de la seconde chambre de fluide MR, dans lequel les pressions de fluide précédente et courante sont obtenues au moyen du capteur de pression de fluide MR.

12. Procédé de commande d'un support hydraulique pour fluide MR relié à un moteur de véhicule, dans lequel le support comprend une cavité de fluide MR interne, dans lequel le support comprend un ensemble plaque de cloisonnement divisant la cavité en des première et seconde chambres de fluide MR, dans lequel l'ensemble plaque de cloisonnement a un orifice s'étendant de la première chambre de fluide MR à la seconde chambre de fluide MR, dans lequel le support comprend une bobine électrique disposée pour influencer magnétiquement l'orifice, et dans lequel le procédé comprend les étapes consistant à :
a) lorsque le moteur du véhicule tourne au ralenti, déterminer une pression de référence comme pression de fluide à l'intérieur de la seconde chambre de fluide MR,
b) lorsque le moteur du véhicule tourne plus vite qu'au ralenti, déterminer un courant électrique de commande à appliquer à la bobine électrique à l'aide d'au moins une différence entre la pression de référence et une pression de fluide courante à l'intérieur de la seconde chambre de fluide MR ; et
c) appliquer le courant de sortie électrique de commande à la bobine électrique.
